# EUROPÄISCHE PATENTSCHRIFT

(11) **EP 0 955 207 B1**
(45) Veröffentlichungstag und Bekanntmachung des Hinweises auf die Patenterteilung: **05.09.2007**
(21) Anmeldenummer: 99108939.2
(22) Anmeldetag: 05.05.1999
(51) Int. Cl.: B60Q 1/26, F21V 9/08

(54) **Mehrkammerleuchte für Fahrzeuge**
Multi-compartment light for motor vehicles
Feu multiple pour véhicules automobiles

(30) Priorität: 08.05.1998 DE 19820656
(43) Veröffentlichungstag der Anmeldung: 10.11.1999
(73) Patentinhaber: Hella KGaA Hueck & Co., 59552 Lippstadt (DE)
(72) Erfinder: Hamelbeck, Antonius, 59609 Anröchte (DE)
(74) Vertreter: Ostermann, Thomas

(56) Entgegenhaltungen:
- EP-A- 0 071 583
- EP-A- 0 340 328
- FR-A- 2 487 041
- US-A- 5 169 224
- US-A- 5 558 423
- US-A- 5 582 480

## Beschreibung

Die Erfindung betrifft eine Mehrkammerleuchte für Fahrzeuge mit einem mehrere Reflektoren aufweisenden Leuchtengehäuse, mit einer gemeinsamen Abschlussscheibe für die Reflektoren und mit mindestens einer Zwischenscheibe, welche sich über die gesamte Lichtaustrittsfläche von mindestens einem der Reflektoren erstreckt.

Eine solche Mehrkammerleuchte für Fahrzeuge ist aus der DE 90 01 659 U1 bekannt. Die Mehrkammerleuchte weist ein aus Kunststoff bestehendes Leuchtengehäuse auf, dessen vordere Öffnung durch eine aus Kunststoff bestehende lichtdurchlässige Abschlussscheibe abgeschlossen ist. Die Rückwand des Leuchtengehäuses bildet mehrere schalenförmige Reflektoren, in welche jeweils eine Öffnung zur Aufnahme einer als Lichtquelle dienenden Lampe eingebracht ist. Die Reflektoren grenzen bis auf die zwischen ihnen verlaufenden Trennwände aneinander. Die Trennwände sind an die Rückwand des Leuchtengehäuses angeformt. Einige der Reflektoren sind gemeinsam durch eine Zwischenscheibe abgedeckt, welche angrenzend zu dem freien Ende der Trennwände und in einem Abstand zur Abschlussscheibe verläuft. Die Abschlussscheibe und die Zwischenscheibe sind mit optischen Elementen besetzt. Die Abschlussscheibe weist auf ihrer Innenseite zeilenförmig verlaufend angeordnete Rückstrahler auf, zwischen denen das Licht streuende Zylinderlinsen angeordnet sind. Die optischen Elemente der Zwischenscheibe sammeln das von den Reflektoren parallel gerichtete Licht derart, dass es gebündelt zwischen den zeilenförmig angeordnet verlaufenden Rückstrahlern hindurchfällt und durch die zwischen den Rückstrahlern angeordneten Zylinderlinsen gestreut wird. Durch die optischen Elemente der Abschluss- und Zwischenscheibe sind die Lampe und die die Lampe aufnehmenden Öffnungen kaschiert und somit von der Vorderseite der Leuchte nicht als störend zu sehen. Nachteilig hierbei ist, dass die optischen Elemente der Abschluss- und Zwischenscheibe eine matte (glanzlose) Oberfläche aufweisen und somit Lichtverluste durch die Abschlussscheibe und Zwischenscheibe entstehen und die Leuchte im ausgeschalteten Zustand stumpf (glanzlos) aussieht. Die optischen Elemente sind nur mit einer matten Oberfläche herstellbar, da die die optischen Elemente entformende Werkzeughälfte nach einem Poliervorgang ihren genauen Oberflächenverlauf verlieren würde.

Aus der DE 1973755 0 A1 ist eine Heckleuchte für Fahrzeuge bekannt geworden, deren Leuchtengehause einen einzigen Reflektor aufweist. Das Leuchtengehäuse ist auf ihrer vorderen Seite durch eine lichtdurchlässige Abschlussscheibe abgeschlossen. Die Abschlussscheibe ist optikfrei gestaltet und lässt eine klare Sicht auf die Reflexionsfläche des Reflektors zu. Die Reflexionsflache des Reflektors ist mit einer facettenartig strukturierten Oberfläche versehen. In eine zentrale Öffnung des schalenförmigen Reflektors ist eine als Lichtquelle dienende Lampe eingesetzt. Die facettenartig strukturierte Oberfläche des Reflektors lenkt das Licht der Lampe in die gewünschte Richtung und an einer unmittelbar vor der Lichtquelle angeordneten Lampenabdeckung vorbei. Die Lampenabdeckung ist aus lichtdurchlässigem Kunststoff hergestellt und ist von einem Rückstrahler gebildet. Der Rückstrahler ist an dem Leuchtengehäuse durch zwei seitlich abstehende Streben gehaltert. Die zur Halterung dienenden Streben des Rückstrahlers verlaufen beim Blick in das Leuchteninnere hinein vor der Reflexionsfläche des Reflektors und sind somit störend für einen harmonischen Gesamteindruck der Leuchte.

Aus der US 5 582 480 ist eine Mehrkammerleuchte für Fahrzeuge mit einem Leuchtengehäuse bekannt, in dem mehrere Lichtquellen und jeweils den Lichtquellen mehrere zugeordnete Reflektoren angeordnet sind. In einer Kammer der bekannten Leuchte sind einer Lichtquelle ein Hauptreflektor und in Lichtaustrittsrichtung vor dem Hauptreflektor angeordnete Zusatzreflektoren zugeordnet. In Lichtaustrittsrichtung vor der Lichtquelle ist ein prismenförmiges Optikelement angeordnet, das sich streifenförmig senkrecht zur optischen Achse der Leuchte erstreckt. Das prismenförmige Optikelement weist auf einer der Lichtquelle zugewandten Seiten spitz zulaufende Spiegelflächen auf, so dass zumindest ein Teil der von dem Hauptreflektor reflektierten Lichtstrahlen von seitlich zu den Zusatzreflektoren reflektiert werden. Auf einer der Lichtquelle abgewandten Seite ist das prismenförmige Optikelement als ein Rückstrahler ausgebildet, so dass es zugleich als eine Abschirmeinrichtung dienen kann. Das Leuchtengehäuse ist mit einer Abschlussscheibe abgedeckt, die optikfrei ausgeführt sein kann. Soll die Abschlussscheibe einfarbig ausgeführt sein, kann innerhalb des Leuchtengehäuses ein Farbfilter vorgesehen sein, der die erforderliche Signalfarbe der Abschlussscheibe erzeugt.

Aus der US 5 558 423 ist eine Mehrkammerleuchte für Fahrzeuge bekannt, bei der mehrere Reflektoren innerhalb eines Leuchtengehäuses angeordnet sind. Eine vordere Öffnung des Leuchtengehäuses ist durch eine gemeinsame Abschlussscheibe abgedeckt. Zwischen der Abschlussscheibe und einem Reflektor des Leuchtegehäuses erstreckt sich eine Zwischenscheibe, die formschlüssig mit einer Abdeckeinrichtung verbunden ist, die den äußeren umlaufenden Rand der Zwischenscheibe und das Innere des Leuchtegehäuses gegen Blicke von außen abschirmt. Eine der Lichtquelle zugeordnete Abschirmeinrichtung ist nicht vorgesehen.

Aufgabe der Erfindung ist es, die im Oberbegriff des Anspruchs 1 beschriebene Mehrkammerleuchte für Fahrzeuge derart zu gestalten, dass Lichtverluste durch die Abschluss- und Zwischenscheibe möglichst gering sind und die Lichtaustrittsflachen der Reflektoren unabhängig voneinander in ihrer Form beliebig ausführbar sind und trotzdem bei einem einfachen Aufbau der Leuchte die die Reflektoren umgebenden Bereiche und eine der Zwischenscheibe benachbarte Lichtquelle weitestgehend gegen Blicke von außen abgeschirmt sind, ohne dass zur Abschirmung dienende Halterteile ein harmonisches Erscheinungsbild der Leuchte stören. Diese Aufgabe wird nach der Erfindung dadurch gelöst, dass
- sowohl die Abschlussscheibe als auch die Zwischenscheibe zumindest in Teilbereichen optikfrei ausgeführt ist
- die Zwischenscheibe eine Abschirmeinrichtung für eine dem Reflektor zugeordnete Lichtquelle tragt und die Abschirmeinrichtung mit einem optikfreien Bereich umgibt
- mindestens der mit der Zwischenscheibe versehene Reflektor von einer Abdeckeinrichtung vollständig umgeben ist, welche das Innere des Leuchtengehäuses und den äußeren umlaufenden Rand der Zwischenscheibe gegen Blicke von au-ßen abschirmt.

Die die Reflektoren abdeckende Abschlussscheibe und die Zwischenscheibe ist zumindest auf dem die Abschirmeinrichtung umgebenden Bereich sowohl auf der Vorder- als auch Rückseite mit einer glatten Oberfläche ausführbar. Dadurch entstehen für die vom Reflektor reflektierten Lichtstrahlen beim Hindurchtreten durch die Zwischenscheibe und die Abschlussscheibe weitestgehend keine Lichtverluste. Außerdem ist von der Vorderseite der Leuchte her die Reflexionsflache des Reflektors durch die glatte Abschlussscheibe und die glatte Zwischenscheibe hindurch klar zu sehen. Eine solche Leuchte weist im ausgeschalteten Zustand ein brillantes Aussehen auf. Der die Abschirmeinrichtung umgebende optikfreie Bereich der Zwischenscheibe dient zur Halterung der Abschirmeinrichtung, welche zur Abdeckung der Lichtquelle und einer die Lichtquelle aufnehmenden Reflektoröffnung dient. Hierbei sollte die Abschirmeinrichtung unmittelbar vor der Lichtquelle angeordnet sein.

Obwohl die Abschlussscheibe optikfrei gestaltet ist, sind weder der äußere Rand der Zwischenscheibe noch Bereiche zwischen den Reflektoren als störend zu sehen, da diese durch die Abdeckeinrichtung abgeschirmt sind.

Die Lichtquelle, welcher die Abschirmeinrichtung zugeordnet ist, ist auch bei einem schräg in das Leuchteninnere fallenden Blick gut abgeschirmt, wenn - optikfreie Bereich der Zwischenscheibe möglichst gleichmäßig um die Abschirmeinrichtung herum verteilt ist. Dies wird erreicht, wenn die Abschirmeinrichtung in einem zentralen Bereich der Lichtscheibe angeordnet ist und mit ihrem äußeren umlaufenden Rand dem Verlauf des an die Zwischenscheibe angrenzenden rückwärtigen Randes der Abdeckeinrichtung angepasst ist.

Die Zwischenscheibe ist sicher im Inneren des Leuchtengehauses gehalten, wenn die Zwischenscheibe mit ihrer Rückseite zu einem den Reflektor umgebenden vorderen Rand des Leuchtengehauses und mit ihrer Vorderseite zu einem rückwärtigen umlaufenden Rand der Abdeckeinrichtung angrenzend verläuft. Hierbei kann die Zwischenscheibe weitestgehend spielfrei zwischen dem Gehäuse und der Abdeckeinrichtung gehalten sein.

Bei zwei sich benachbarten Zwischenscheiben ist es vorteilhaft, wenn diese einstückig ausgeführt und jeweils umlaufend von der Abdeckeinrichtung umgeben sind. Dadurch sind die Zwischenscheiben kostengünstig herstellbar, und die Montage ist einfach und schnell durchführbar. In diesem Zusammenhang ist es weiterhin vorteilhaft, wenn die Zwischenscheibe über ein Verbindungsstück einteilig mit einer eine Lichtquelle aufnehmenden Dichthaube ausgeführt ist, wobei das Verbindungsstück durch die Abdeckeinrichtung abgedeckt ist und zumindest die Deckfläche der Lichthaube eine Abschirmvorrichtung aufweist. Die Verwendung einer Lichthaube ist insbesondere dann vorteilhaft, wenn die Abdeckeinrichtung sich bis zur Lichthaube hin erstreckt und somit das Verbindungsstück durch die Abdeckeinrichtung vollständig abgedeckt ist.

Weiterhin ist es vorteilhaft, wenn die Abschirmvorrichtung der Lichthaube und die Abschirmeinrichtung der Zwischenscheibe von optischen Elementen gebildet ist. Die optischen Elemente können das direkt aus der Lichtquelle austretende Licht sammeln oder streuen oder einen Rückstrahler bilden.

Bei einer facettenartig strukturierten Reflexionsfläche der Reflektoren sind die die Lichtquellen bildenden Lampen nicht als Spiegelbild in der Reflexionsfläche zu erkennen.

Bei einer besonders vorteilhaften Weiterbildung der Erfindung dient als Abdeckeinrichtung ein zwischen den Reflektoren und der Abschlußscheibe angeordnetes rahmenartiges Abdeckteil. Das rahmenartige Abdeckteil kann wie die Reflektoren auf der Vorderseite mit einer reflektierenden Oberfläche versehen sein. Die Oberfläche des Abdeckteils kann auch der Wagenfarbe angepaßt sein. In diesem Zusammenhang ist es weiterhin zweckmäßig, wenn sowohl die Zwischenscheibe als auch das Abdeckteil mit Halteelementen versehen sind, welche selbsttätig mit dem Leuchtengehäuse verbunden sind und durch das Abdeckteil abgedeckt sind. Die Halteelemente können aus federnden Rastarmen bestehen, die mit ihren Rastnasen Öffnungen in der Rückseite des Gehäuses selbsttätig hintergreifen. Nach einem Aufsetzen der Abschlußscheibe auf das Leuchtengehäuse und einem Verschweißen der Abschlußscheibe mit dem Leuchtengehäuse kann das Abdeckteil gleichzeitig mit dem Leuchtengehäuse verschweißt werden.

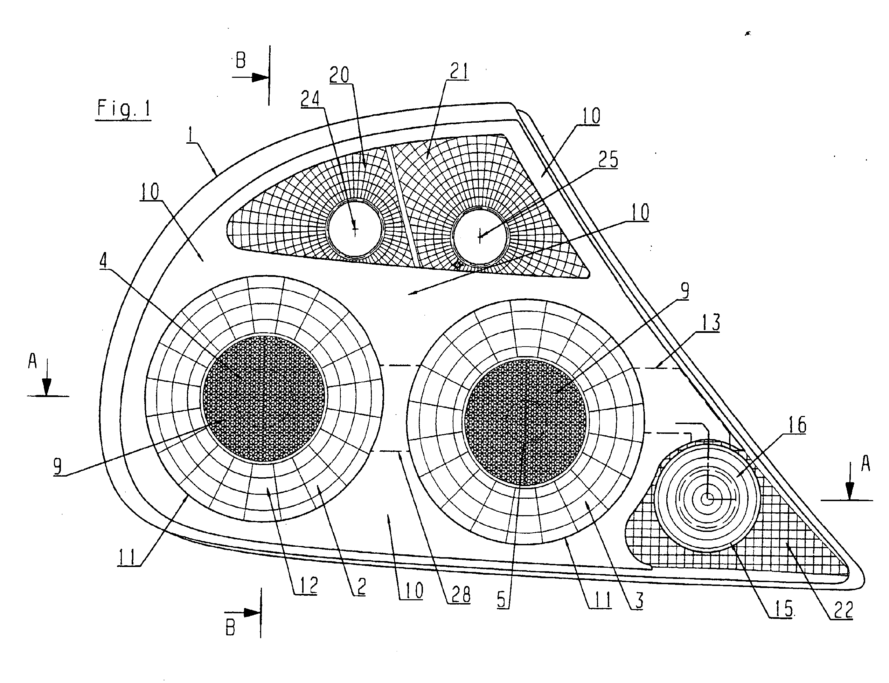

Ein Ausführungsbeispiel nach der Erfindung ist in der Zeichnung dargestellt, und zwar zeigen
Figur 1 in einer Vorderansicht eine Mehrkammerleuchte für Fahrzeuge, welche an das Heck eines Fahrzeuges anbringbar ist;

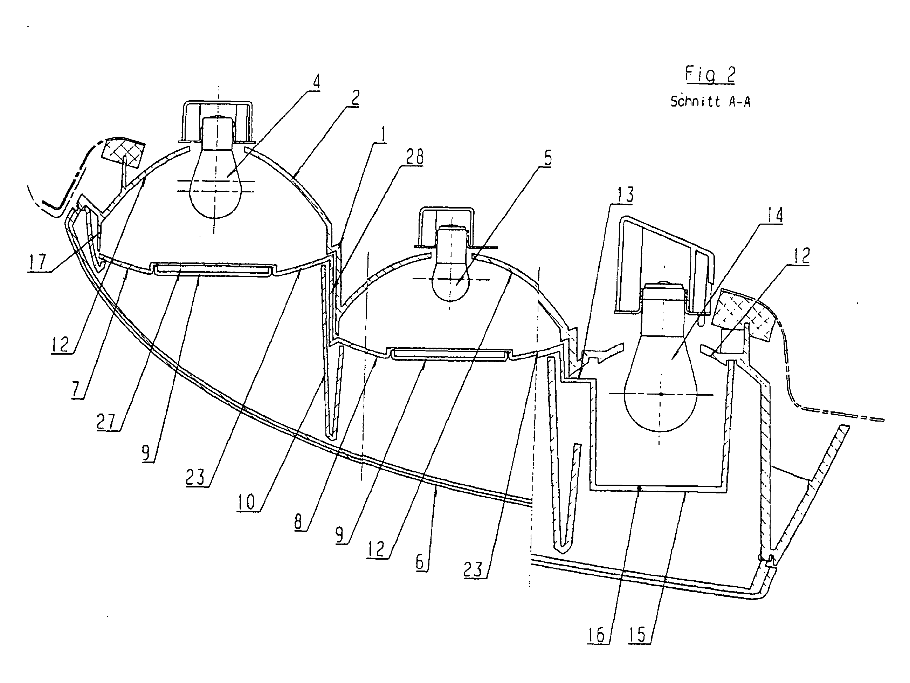

Figur 2 einen Schnitt nach der Linie A-A in Figur 1 durch drei Kammern der Leuchte und

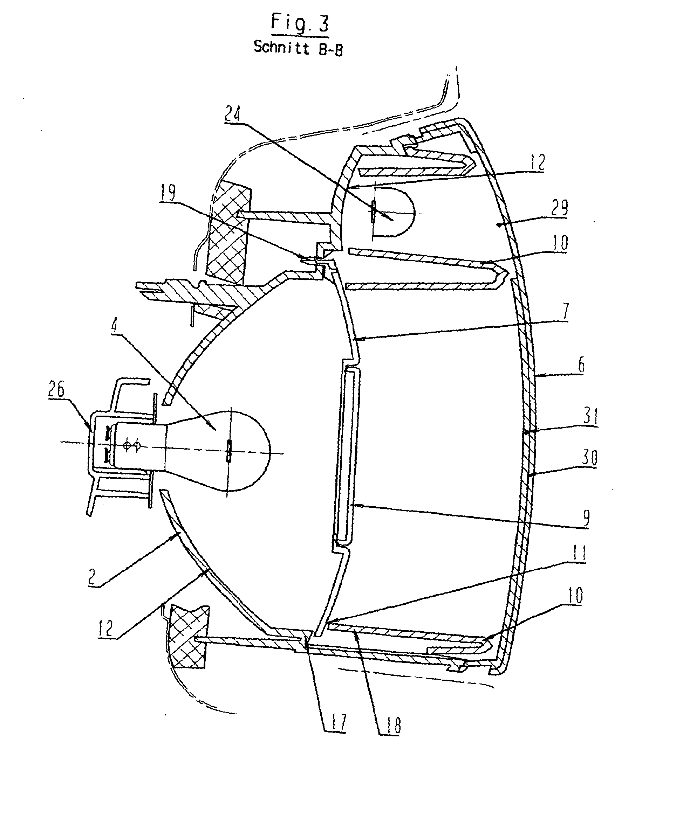

Figur 3 einen Schnitt nach der Linie B-B in Figur 1 durch zwei Leuchtenkammern.

Die Mehrkammerleuchte für Fahrzeuge weist ein aus Kunststoff bestehendes Leuchtengehäuse (1) auf, dessen vordere Öffnung durch eine lichtdurchlässige Abschlußscheibe (6) verschlossen ist. Die Abschlußscheibe (6) ist mit ihrem äußeren umlaufenden Rand dicht mit dem äußeren umlaufenden Rand des Leuchtengehäuses (1) verschweißt. Die Rückwand des Leuchtengehäuses (1) bildet die schalenförmigen Reflektoren (2, 3, 20, 21, 22), welche mit einer facettenartig strukturierten Reflexionsfläche (12) versehen sind. Die Reflexionsfläche (12) ist mit einer reflektierenden Oberfläche versehen. Innerhalb der schalenförmigen Reflektoren (2, 3, 20, 21, 22) sind von Lampen gebildete Lichtquellen (4, 5, 14, 24, 25) angeordnet, welche durch Reflektoröffnungen hindurchführen und in Fassungen (26) auf der Rückseite des Leuchtengehäuses (1) gehaltert sind.

Die Reflektoren (2, 3) sind an ihrer Lichtaustrittsfläche (11) kreisrund gestaltet und von einem in Lichtaustrittsrichtung weisenden vorderen Rand (17) des Leuchtengehäuses (1) umgeben. Die Reflektoren (2, 3) sind jeweils durch eine kreisrunde lichtdurchlässige Zwischenscheibe (7 bzw. 8) abgedeckt. Die Zwischenscheiben (7, 8) weisen in ihrem zentralen Bereich eine Abschirmeinrichtung (9) auf. Die Abschirmeinrichtung (9) ist von einem Rückstrahler gebildet. Der Rückstrahler besteht aus einer schalenförmigen kreisrunden Scheibe, welche mit ihrem umlaufenden Rand an dem Grund einer entsprechend gestalteten Vertiefung (27) anliegt, die in die der Abschlußscheibe (6) zugewandten Seite der Zwischenscheibe (7 bzw. 8) eingebracht ist. Die die Optik für den Rückstrahler (9) aufweisende Scheibe ist dicht mit der Zwischenscheibe (7 bzw. 8) verschweißt. Die Zwischenscheiben (7 und 8) weisen einen um die Abschirmeinrichtung (9) herum verlaufenden kreisringförmigen, optikfreien Bereich (23) auf. Dieser kreisringförmige Bereich (23) grenzt mit seinem äußeren umlaufenden Rand an die die Reflektoren (2,3) umgebenden vorderen Ränder (17) des Leuchtengehäuses (1) an. Die Abschlußscheibe (6) und die kreisringförmigen optikfreien Bereiche (23) der Zwischenscheiben (7, 8) weisen eine glatte Vorder- und Rückseite auf. Deshalb sind durch die Abschlußscheibe (6) und die kreisringförmigen Bereiche (23) der Zwischenscheiben (7, 8) hindurch die facettenartig strukturierten Reflexionsflächen (12) der Reflektoren (2, 3) klar zu sehen. Dadurch entsteht für diese beiden Reflektoren (2 und 3) im ausgeschalteten Zustand der Leuchte ein brillantes Aussehen, und die Lampen (4, 5) sind durch die Abschirmeinrichtung (9) abgedeckt, ohne daß die zur Halterung dienenden optikfreien Bereiche (23) an der Zwischenscheibe (7, 8) störend wirken. Die Reflektoren (2, 3) dienen zur Erzeugung des Schlußlichtes, wobei der Reflektor (3) zusätzlich zur Erzeugung des Bremslichtes dient. Oberhalb der beiden Reflektoren (2, 3) weist das Leuchtengehäuse (1) die Reflektoren (20, 23) auf. Der Reflektor (20) dient zur Erzeugung des Rückfahrlichtes und der Reflektor (21) zur Erzeugung des Blinklichtes. Seitlich neben den beiden Reflektoren (2, 3) ist in einer spitzwinkeligen Ecke des Leuchtengehäuses (1) der dreieckförmige Reflektor (22) angeordnet. Die dem Reflektor (22) zugeordnete Lichtquelle (14) ist von einer lichtdurchlässigen Lichthaube (15) umgeben. Die Lichthaube (15) weist an ihrer Deckfläche eine von optischen Elementen gebildete Abschirmvorrichtung (16) auf. Die optischen Elemente der Abschirmvorrichtung (16) richten das direkt aus der Lichtquelle (14) austretende Licht. Der Reflektor (22) und die optischen Elemente der Lichthaube (16) dienen zur Erzeugung eines Nebelschlußlichtes. Die Lichthaube (15) ist durch ein Verbindungsstück (13) mit der Zwischenscheibe (8) einstückig verbunden, während die Zwischenscheiben (7, 8) über ein Verbindungsstück (28) einstückig verbunden sind. Zwischen der Abschlußscheibe (6) und den Reflektoren (2, 3, 20, 21, 22) bzw. den Zwischenscheiben (7, 8) ist eine Abdeckeinrichtung (10) angeordnet. Die Abdeckeinrichtung (10) ist von einem rahmenartigen Abdeckteil gebildet, welches aus Kunststoff hergestellt ist und jeweils eine kreisrunde Öffnung für die Reflektoren (2 und 3) aufweist. Das rahmenartige Abdeckteil (10) verläuft mit einem die beiden Öffnungen begrenzenden rückwärtigen Rand (18) angrenzend zur Vorderseite des optikfreien Bereiches (23) der Zwischenscheibe (7 bzw. 8).

Das Abdeckteil (10) erstreckt sich, ausgehend von dem rückwärtigen Rand (18), bis nahe zur Innenseite der Abschlußscheibe (6). Das Abdeckteil (10) ist auf seiner äußeren Seite mit einer reflektierenden Oberfläche versehen. Das Abdeckteil (10) weist oberhalb der Reflektoren (2, 3) eine gemeinsame Öffnung für die unmittelbar nebeneinanderliegenden Reflektoren (20, 21) auf. Das Abdeckteil erstreckt sich, bis auf den Bereich des Reflektors (22), mit seinem äußeren Rand bis zum äußeren Rand des Leuchtengehäuses (1) hin und deckt somit die Bereiche zwischen den Reflektoren (2, 3, 20, 21) und zwischen den Reflektoren (2, 3, 20, 21) und den äußeren Rand des Leuchtengehäuses ab. Das Abdeckteil (10) erstreckt sich bis zur Lichthaube (15), welche dem Reflektor (22) zugeordnet ist, hin und begrenzt somit eine Seite des Reflektors (22), während die beiden anderen Seiten des dreieckförmigen Reflektors (22) durch den äußeren Rand des Leuchtengehäuses (1) begrenzt sind.

Die Abdeckeinrichtung (10) bildet zusammen mit den die Reflektoren (2, 3, 20, 21) zumindest in Teilbereichen umgebenden vorderen Rand (17) des Leuchtengehäuses (1) eine Trenneinrichtung zwischen einzelnen Leuchtenkammern der Leuchte. Die Abschlußscheibe (6) und die Zwischenscheiben (7, 8) sind durch Halteelemente (19) selbstrastend an der Rückseite des Leuchtengehäuses (1) festgesetzt. Die Zwischenscheiben (7, 8) und die Lichthaube (15) und/oder die Abschlußscheibe (6) kann als Filter dienen. Die Glühlampe (25) für Blinklicht weist einen gelb eingefärbten Glaskolben auf. Die Abschlußscheibe (6) weist im Bereich der Reflektoren (20, 21) ein Fenster (29) ohne Filterfunktion auf. Die Abschlußscheibe (6) besteht, bis auf das Fenster (29), aus zwei Schichten (30, 31). Die Schichten (30, 31) sind aneinandergespritzt, wobei die Schicht (30) außen verläuft und glasklar und ohne Filterfunktion ist, während die Schicht (31) auf der Innenseite der Abschlußscheibe (3) verläuft und rot eingefärbt ist.

### Bezugszeichenliste

- 1: Leuchtengehäuse
- 2: Reflektor
- 3: Reflektor
- 4: Lichtquelle
- 5: Lichtquelle
- 6: Abschlußscheibe
- 7: Zwischenscheibe
- 8: Zwischenscheibe
- 9: Abschirmeinrichtung
- 10: Abdeckeinrichtung
- 11: Lichtaustrittsfläche
- 12: facettenartige Reflexionsfläche
- 13: Verbindungsstück
- 14: Lichtquelle
- 15: Lichthaube
- 16: Abschirmvorrichtung
- 17: vorderer Rand
- 18: rückwärtiger Rand
- 19: Halteelement
- 20: Reflektor
- 21: Reflektor
- 22: Reflektor
- 23: optikfreier Bereich
- 24: Lichtquelle
- 25: Lichtquelle
- 26: Fassung
- 27: Vertiefung
- 28: Verbindungsstück
- 29: Fenster
- 30: Schicht
- 31: Schicht

## Patentansprüche

1. Mehrkammerleuchte für Fahrzeuge mit einem mehrere Reflektoren (2, 3, 20, 21, 22) aufweisenden Leuchtengehäuse (1), mit einer gemeinsamen Abschlußscheibe (6) für die Reflektoren (2, 3, 20, 21, 22) und mit mindestens einer Zwischenscheibe (7, 8), welche sich über die gesamte Lichtaustrittsfläche von mindestens einem der Reflektoren (2, 3) erstreckt, **dadurch gekennzeichnet, daß**
- sowohl die Abschlußscheibe (6) als auch die Zwischenscheibe (7, 8) zumindest in Teilbereichen optikfrei ausgeführt ist
- die Zwischenscheibe (7, 8) eine Abschirmeinrichtung (9) für eine dem Reflektor (2, 3) zugeordnete Lichtquelle (4, 5) trägt und die Abschirmeinrichtung (9) mit einem optikfreien Bereich (23) umgibt
- mindestens der mit der Zwischenscheibe (7, 8) versehene Reflektor (2, 3) von einer Abdeckeinrichtung (10) vollständig umgeben ist, welche den äußeren umlaufenden Rand der Zwischenscheibe (7, 8) und das Innere des Leuchtengehäuses (1) gegen Blicke von außen abschirmt.

2. Mehrkammerleuchte nach Anspruch 1, **dadurch gekennzeichnet, daß** die Abschirmeinrichtung (9) in einem zentralen Bereich der Zwischenscheibe (7, 8) angeordnet ist und mit ihrem äußeren umlaufenden Rand dem Verlauf des an die Zwischenscheibe (7, 8) angrenzenden rückwärtigen Randes (18) der Abdeckeinrichtung (9) angepaßt ist.

3. Mehrkammerleuchte nach Anspruch 1 oder 2, **dadurch gekennzeichnet, daß** die Zwischenscheibe (7, 8) mit ihrer Rückseite zu einem den Reflektor (2, 3) umgebenden vorderen Rand (17) des Leuchtengehäuses (1) und mit ihrer Vorderseite zu einem rückwärtigen umlaufenden Rand (18) der Abdeckeinrichtung (10) angrenzend verläuft.

4. Mehrkammerleuchte nach einem der Ansprüche 1 bis 3, **dadurch gekennzeichnet, daß** mindestens zwei sich benachbarte Zwischenscheiben (7, 8), welche jeweils einem Reflektor (2 bzw. 3) zugeordnet sind, einstückig ausgeführt sind und jeweils umlaufend von der Abdeckeinrichtung (10) umgeben sind.

5. Mehrkammerleuchte nach einem der Ansprüche 1 bis 4, **dadurch gekennzeichnet, daß** die mit einer Abschirmeinrichtung (9) versehene Zwischenscheibe (7, 8) über ein Verbindungsstück (13) einteilig mit einer eine Lichtquelle (14) aufnehmenden Lichthaube (15) ausgeführt ist, wobei das Verbindungsstück (13) durch die Abdeckeinrichtung (10) abgedeckt ist und zumindest die Deckfläche der Lichthaube (15) eine Abschirmvorrichtung (16) aufweist.

6. Mehrkammerleuchte nach einem der Ansprüche 1 bis 5, **dadurch gekennzeichnet, daß** die von der Zwischenscheibe (7, 8) getragene Abschirmeinrichtung (9) von optischen Elementen gebildet ist.

7. Mehrkammerleuchte nach einem der Ansprüche 1 bis 6, **dadurch gekennzeichnet, daß** die von der Zwischenscheibe (7, 8) getragene Abschirmeinrichtung (9) von einem Rückstrahler gebildet ist.

8. Mehrkammerleuchte nach einem der Ansprüche 1 bis 7, **dadurch gekennzeichnet, daß** zumindest die mit einer Abschirmeinrichtung bzw. -vorrichtung (9 bzw. 16) versehenen Reflektoren (2, 3, 22) eine facettenartig strukturierte Reflexionsfläche (12) aufweisen.

9. Mehrkammerleuchte nach einem der Ansprüche 1 bis 8, **dadurch gekennzeichnet, daß** als Abdeckeinrichtung (10) ein zwischen den Reflektoren (2, 3, 20, 21, 22) und der Abschlußscheibe (6) angeordnetes rahmenartiges Abdeckteil dient.

10. Mehrkammerleuchte nach Anspruch 9, **dadurch gekennzeichnet, daß** sowohl die Zwischenscheibe (7, 8) als auch das Abdeckteil (10) mit Halteelementen (19) versehen sind, welche selbsttätig mit dem Leuchtengehäuse (1) verbunden sind und durch das Abdeckteil (10) abgedeckt sind.

## Claims

1. Combination rear lamp for vehicles with a lamp housing (1) with several reflectors (2, 3, 20, 21, 22) in it, with a cover lens (6) shared by the reflectors (2, 3, 20, 21, 22) and with at least one intermediate lens (7, 8) going across the entire light exit aperture of at least one of the reflectors (2, 3), wherein
- at least some areas of both the cover lens (6) and the intermediate lens (7, 8) are not patterned;
- the intermediate lens (7, 8) carries a shield (9) for a light source (4, 5) allocated to the reflector (2, 3), and surrounds the said shield (9) with a non-patterned area (23);
- at least the reflector (2, 3) that the intermediate lens (7, 8) is allocated to is fully enclosed by a cover element (10) which hides the outer circumferential edge of the intermediate lens (7, 8) and the inside of the lamp housing (1) from external view.

2. Combination rear lamp as in claim 1, wherein the shield (9) is located at a central area of the intermediate lens (7, 8) such that its outer circumferential edge adapts to the rear edge (18) of the covering element (9) following the shape of the intermediate lens (7, 8).

3. Combination rear lamp as in claims 1 or 2, wherein the back of the intermediate lens (7, 8) abuts the front edge (17) of the lamp housing (1) that goes all the way around the reflector (2, 3) and the front of the intermediate lens (7, 8) abuts a rear circumferential edge (18) of the covering element (10).

4. Combination rear lamp as in one of claims 1 to 3, wherein at least two adjacent intermediate lenses (7, 8), each of which is allocated to a different reflector (2 or 3), are made as a single part and enclosed by the covering element (10) going all the way around each one of them.

5. Combination rear lamp as in one of claims 1 to 4, wherein a link (13) connects the intermediate lens (7, 8) and the shield (9) it is equipped with a light dome (15) designed to contain a light source (14), where the link (13) is hidden under the covering element (10) and where at least the cover area of the light dome (15) carries a shield (16).

6. Combination rear lamp as in one of claims 1 to 5, wherein the shield (9) carried by the intermediate lens (7, 8) is made up of optical elements.

7. Combination rear lamp as in one of claims 1 to 6, wherein the shield (9) carried by the intermediate lens (7, 8) is made up of a reflex reflector.

8. Combination rear lamp as in one of claims 1 to 7, wherein at least the reflectors (2, 3, 22) equipped with a shield or shielding device (9 or 16) feature a multi-faceted reflecting surface (12).

9. Combination rear lamp as in one of claims 1 to 8, wherein a frame-like cover located between the reflectors (2, 3, 20, 21, 22) and the cover lens (6) serves as the covering element (10).

10. Combination rear lamp as in claim 9, wherein both, the intermediate lens (7, 8) and the covering element (10), feature lugs (19) which separately connect to the lamp housing (1) and which are hidden under the covering element (10).

## Revendications

1. Feu à chambres multiples pour véhicules, avec un boîtier de feu (1) présentant plusieurs réflecteurs (2, 3, 20, 21, 22), avec une glace de fermeture (6) commune aux réflecteurs (2, 3, 20, 21, 22) et avec au moins une glace intermédiaire (7, 8) qui s'étend sur toute la surface de sortie de lumière de l'un au moins des réflecteurs (2, 3), **caractérisé en ce que**
- la glace de fermeture (6) de même que la glace intermédiaire (7, 8) sont réalisées sans éléments optiques du moins dans des zones partielles,
- la glace intermédiaire (7, 8) porte un système de blindage (9) pour une source lumineuse (4, 5) associée au réflecteur (2, 3) et entoure le système de blindage (9) avec une zone sans éléments optiques (23),
- au moins le réflecteur (2, 3) muni de la glace intermédiaire (7, 8) est entouré complètement par un dispositif de recouvrement (10) qui masque le bord périphérique extérieur de la glace intermédiaire (7, 8) et l'intérieur du boîtier de feu (1) aux regards de l'extérieur.

2. Feu à chambres multiples selon la revendication 1, **caractérisé en ce que** le système de blindage (9) est disposé dans une zone centrale de la glace intermédiaire (7, 8) et est adapté par son bord périphérique extérieur au contour du bord arrière (18) du dispositif de recouvrement (9) adjacent à la glace intermédiaire (7, 8).

3. Feu à chambres multiples selon la revendication 1 ou la revendication 2, **caractérisé en ce que** la glace intermédiaire (7, 8) est adjacente par sa face arrière à un bord avant (17) du boîtier de feu (1) entourant le réflecteur (2, 3) et par sa face avant à un bord périphérique arrière (18) du dispositif de recouvrement (10).

4. Feu à chambres multiples selon l'une des revendications 1 à 3, **caractérisé en ce qu'**au moins deux glaces intermédiaires (7, 8) voisines associées chacune à un réflecteur (2 ou 3) sont réalisées d'une seule pièce et sont entourées sur leur périmètre par le dispositif de recouvrement (10).

5. Feu à chambres multiples selon l'une des revendications 1 à 4, **caractérisé en ce que** la glace intermédiaire (7, 8) munie d'un système de blindage (9) est réalisée d'une seul tenant par l'intermédiaire d'une pièce de liaison (13) avec une calotte de lampe (15) dans laquelle se loge une source lumineuse (14), la pièce de liaison (13) étant masquée par le dispositif de recouvrement (10) et au moins la surface de recouvrement de la calotte de lampe (15) présentant un dispositif de blindage (16).

6. Feu à chambres multiples selon l'une des revendications 1 à 5, **caractérisé en ce que** le système de blindage (9) porté par la glace intermédiaire (7, 8) est formé par des éléments optiques.

7. Feu à chambres multiples selon l'une des revendications 1 à 6, **caractérisé en ce que** le système de blindage (9) porté par la glace intermédiaire (7, 8) est formé par un élément réfléchissant.

8. Feu à chambres multiples selon l'une des revendications 1 à 7, **caractérisé en ce qu'**au moins les réflecteurs (2, 3, 22) munis d'un système ou dispositif de blindage (9 ou 16) présentent une surface réfléchissante structurée à facettes (12).

9. Feu à chambres multiples selon l'une des revendications 1 à 8, **caractérisé en ce qu'**une pièce de recouvrement en forme de cadre disposée entre les réflecteurs (2, 3, 20, 21, 22) et la glace de fermeture (6) sert de dispositif de recouvrement (10).

10. Feu à chambres multiples selon la revendication 9, **caractérisé en ce que** la glace intermédiaire (7, 8) de même que la pièce de recouvrement (10) sont munis d'éléments de retenue (19) qui sont reliés automatiquement au boîtier de feu (1) et recouverts par la pièce de recouvrement (10).
